# EUROPEAN PATENT APPLICATION

(11) **EP 0 833 312 A1**
(43) Date of publication of application: **01.04.1998**
(21) Application number: 97307710.0
(22) Date of filing: 30.09.1997
(51) Int. Cl.: G11B 7/125, G11B 7/00, G11B 11/10

(54) **Information reproduction device and method**

(30) Priority: 30.09.1996 JP 258185/96
(71) Applicant: NIKON CORPORATION, Tokyo 100 (JP)
(72) Inventor: Oshikiri, Hiroyuki, c/o Nikon Corporation, Chiyoda-ku, Tokyo 100 (JP)
(74) Representative: Skone James, Robert Edmund

(57) **Abstract**

An information reproduction device includes a position detector (26) that detects the radius position on the disk where a light beam is irradiated by a light source (4) that is used to reproduce information from the disk. The information reproducing device also includes a light output controller (16) that controls the light output from the light source (4). The light output controller (16) causes the light output of a light beam emitted by a light source (4) (e.g., a laser) to assume a prescribed value based on the output supplied from the position detector (26). This ensures that the value of the light output does not exceed a predete'rmined upper limit value (Pr Limit Value) relative to the disk radius position upon which the light beam is irradiated. Accordingly, the information reproduction device accurately irradiates light beams having a specified reproduction power relative to the radius position of the recording surface of the optical disk, so that the recorded information on the optical disk is reproduced by reflecting the light from the optical disk.

## Description

The present invention relates to an information reproduction device, and in particular to an information reproduction device for use with a read-writeable optical disk, such as, for example, a magnetooptical (MO) disk, a phase-change type disk and the like.

Heretofore, in the case of the reproduction of information from a read-writeable disk such as an MO or phase-change type disk, the information has been reproduced using a sufficiently lower constant light (laser) output than the light (laser) output used during recording and erasure. This is done so that the recorded information is not erased or destroyed. In other words, assuming that the light output reproduction power is Pr (= Constant), and the maximum value of the reproduction power that does not destroy the information is Prmax, the information is reproduced with a reproduction power Pr so that Pr<Prmax.

In recent years, various techniques have been proposed to increase the recording capacity of optical disks. Some of these techniques include narrowing the gap between the recording tracks in order to increase the recording density, and reducing the length (i.e., the size) of the smallest recording mark.

In these techniques, particularly when the length of the recording mark is gradually reduced, the signal amplitude of the reproduction signal corresponding to the mark becomes smaller due to the influence of the OTF (optical transmission function) of the optical system. The reproduction signal includes various types of noise, such as, for example, the amp noise from the reproduction amplifier, strong fluctuating noise of the semiconductor laser (the light source) for the optical disk medium, and shot noise and the like produced at the time of photoelectric conversion with the light detector for the light reflected from the optical disk.

Therefore, as the length of the mark is reduced, causing the signal amplitude corresponding to the mark to become smaller, the desired signals become over-shadowed by noise. This can make it impossible to correctly reproduce the signals.

Therefore, it is necessary to make the signal amplitude of the reproduction signal larger, and to relatively reduce the noise in relation to the signal amplitude. In order to accomplish this, the light amount that is incidental to the detector of the reproduction signal can be increased, which is good for the influence of the noise component because the noise component is not linearly related to the incident light amount. In other words, if the reproduction power Pr is temporarily doubled, the signal amplitude doubles, however, each type of noise does not increase much (and certainly does not double) because the components that cause the noise do not rely on the reproduction power. Accordingly, the ratio of the reproduction signal to the noise (the SN ratio) almost doubles, and the influence of the noise is not received, making it possible to reproduce a signal correctly.

In a high density recording, the entire surface of the optical disk is partitioned into a number of regions in the radius direction. These regions also are referred to as zones or bands (due to their annular shape). Additionally, the ZCAV (Zone-CAV) format is used for recording and reproduction so that the lengths of the smallest marks in each region are approximately the same. Based on the ZCAV format, because the rotation speed of the disk is constant, the recording reproduction frequency increases for information recorded toward the outer periphery of the disk. Accordingly, a wide frequency zone for reproducing the signal becomes necessary.

On the one hand, the amplifier noise of the reproduction signal includes a circuit-like agitation noise that becomes larger as the frequency increases. Because of this characteristic, in the case where the outer periphery (which has a high recording reproduction frequency) of the disk is reproduced, the noise increases relative to the inner periphery, and the SN ratio worsens.

Also, the maximum value of the reproduction power Prmax that does not destroy the recorded information is a function of the linear velocity of the light spot on the disk, and becomes larger in proportion to approximately the square root of the linear velocity.

With these considerations in mind, one might consider varying the reproduction power in order to reduce the size of the minimum (smallest) marks that record and reproduce with respect to the entire surface of the disk. The reproduction power Pr can be set so that the information is not destroyed at the inner periphery of the disk where Prmax is smallest and, in order to improve the SN ratio at the outer periphery of the disk where Prmax is largest, the reproduction power Pr can be increased at the outer periphery of the disk.

However, with an information reproduction device of the type that uses a variable reproduction power format, when the optical head follows the track during the reproduction of the information or when there is tracking of the target track with random seeking, if the tracking gets out of place (i.e., if tracking errors occur), problems occur in that the optical head can move to the inner periphery while still using the high reproduction power that is suitable for the outer periphery. Accordingly, there is a danger of the data of the inner periphery being destroyed.

It is an aspect of the invention to provide an information reproduction device that changes the reproduction power according to the track position while preventing the recorded data from being destroyed even when there are tracking errors.

In order to address the above and other problems, an information reproduction device according to one aspect of the present invention includes a position detection means for detecting the radius position on the disk where a light beam is irradiated by a light source that is used to reproduce information from the disk. The information reproducing device also includes a light output control means for controlling the light output from the light source. The light output control means causes the light output of the light beam emitted by the light source to assume a prescribed value based on the output supplied from the position detection means. This ensures that the value of the light output does not exceed a predetermined upper limit value relative to the disk radius position upon which the light beam is irradiated. Accordingly, the information reproduction device accurately irradiates light beams having a specified reproduction power relative to the recording surface of the optical disk, so that the recorded information on the optical disk is reproduced by reflecting the light from the optical disk.

When the disk is an optical disk having the information recorded thereon by the Zone CAV format, for example, an upper limit value may be established for each zone into which the optical disk is partitioned.

Preferably, a larger value may be established for disk radius positions on the outer periphery of the disk as compared to positions on the disk inner periphery.

The upper limit value may be larger than the light output value used for normal reproduction, yet is smaller than the maximum light output value that does not destroy the recorded information.

When the information reproduction device includes an optical head that emits the light beam and that changes the radius position of the light beam by moving in a radius direction of the optical disk, the position detection means may detect the radius position of the light beam by detecting the radius position of the optical head.

The light output control means may include a memory such that the light output control means establishes the upper limit value by looking up a predetermined upper limit value in the memory based on the detected radius position.

A method of using the information reproduction device to reproduce information from a recording surface of the optical disk, includes the steps of:
irradiating a light beam onto the recording surface of the optical disk;
detecting a radius position on the optical disk where the light beam is irradiated using the position detection means; and
using the light output control means, controlling the intensity of the light beam based on the detected radius position so as to prevent the intensity of the light beam from exceeding an upper limit value for the detected radius position.

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims. It will be understood that each of the features described herein can be taken separately or jointly.

The invention will be described in conjunction with the following drawings in which like reference numerals designate like elements and wherein:
Fig. 1 is a block diagram of an information reproduction device according to an embodiment of the present invention; and
Fig. 2 illustrates the relationship of the disk radius directional position and the values of reproduction power upper limit value and the Pr limit value in the information reproduction device according to an embodiment of the present invention.

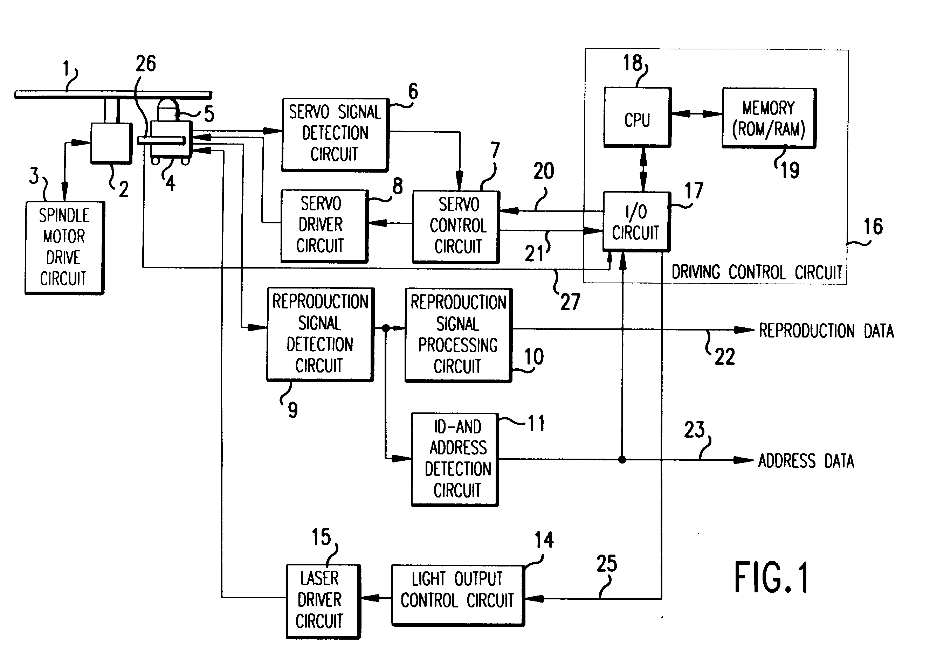

Fig. 1 is a block diagram that illustrates the drive system of an information reproduction device that reproduces information from an optical disk according to an embodiment of the present invention.

In the present example, the entire surface of the recording surface of the optical disk is partitioned into a number of regions (or zones) in the radius direction. An example is explained of the case where application is made of the ZCAV (Zone-CAV) format that records and reproduces so that the minimum mark length is made to be approximately the same size for each region. In other words, a relatively constant light intensity and duration is used within each region, which causes the size of the marks to vary within each region. The inner periphery of each region has that region's smallest mark while the outer periphery of each region has that region's largest mark because the linear velocity of the inner periphery is smaller than the linear velocity of the outer periphery. The light intensity and duration is chosen for each region, however, so that the smallest mark for all of the regions is approximately the same.

Referring to Fig. 1, a spindle motor 2 causes an optical disk 1 to rotate. Spindle motor drive circuit (or driver) 3 controls spindle motor 2 to rotate at a constant number of rotations (rpm) (fixed angular velocity) . Optical head 4 is provided with a semiconductor laser (not illustrated in the figure) that irradiates a light beam (laser light) onto optical disk 1. Optical head 4 also includes an object lens (not illustrated in the figure) and a PIN photo-diode (not illustrated in the figure) that detects the reflected light from the optical disk 1. Recording/reproduction of information is performed relative to arbitrary tracks established on the recording surface of the optical disk 1. Actuator 5 controls the focal point of the light beam from optical head 4 (i.e., performs focusing) and also controls the following of the tracks (i.e., performs tracking).

Based on the detected output of the reflected light, which is detected with, e.g., a PIN photo-diode that is separated into 4 or 6 parts (not illustrated in the figure) attached to the optical head 4, servo signal detection circuit 6 generates a tracking error signal (TE) indicating the position error between the light beam and the desired track, a track total signal (TT) indicating the total reflected light from the track, a focus error signal (FE) indicating the focal point error, and the Itotal signal (Itotal) indicating the total light amount of focusing. Servo control circuit 7 controls actuator 5 so that the light beam is irradiated with a fixed focus relative to the desired track, based on each of the types of servo signals. In particular, servo control circuit 7 supplies control signals to a servo drive circuit 8 that drives actuator 5 according to the output of the servo control circuit 7.

A brief description of the data decoding process will now be provided. As noted above, according to the ZCAV format, the surface of the optical disk is partitioned in the radius direction into a plurality of regions, which are annular in shape. A plurality of tracks are provided in each region. The information is recorded on the tracks in recording units, referred to as sectors. Each sector includes, *inter alia,* a header portion and a data field portion. The header portion includes various information including ID and address data. The data field portion includes various information including user data. The reproduced information is processed (including decoding) to obtain the ID, address, user and other information using any number of known techniques. For more details of processing/decoding techniques, see, for example, U.S. Patents Nos. 5,258,933; 5,345,342; 5,400,189; and 5,406,427.

Reproduction signal detection circuit 9 detects the reproduction signal based on the detected output of the reflected light that was detected by the PIN photo-diode of optical head 4. Reproduction signal processing circuit 10 outputs the information recorded in the user data portion of a sector as reproduction data 22 based on the reproduction signal provided from reproduction signal detection circuit 9. ID and address detection circuit 11 outputs the position information that is recorded in the address portion of a sector as address data 23, based on the reproduction signal provided from the reproduction signal detection circuit 9.

Light output control circuit 14 controls. the light output of the semiconductor laser so that the desired light output can be obtained based on a prescribed light output signal 25. Laser drive circuit (or driver) 15 drives the laser by controlling the electrical current supplied to the semiconductor laser using, e.g., the APC (Auto Power Control) operation according to the output supplied from the light output control circuit 14.

A linear movement position detector 26 detects the radius directional position of optical head 4 relative to the optical disk 1. The obtained position data 27 is sent to a driving control circuit (or controller) 16. Linear movement position detector 26 can be any number of different detectors that are capable of detecting the linear position of the optical head or of the light spot formed by the light beam on the optical disk. For example, detector 26 can include a light emitter positioned on the optical head 4 that emits light onto a linear array of photo-detectors, such as a linear CCD. The position of the optical head 4 is detected based on the portion of the CCD illuminated by the light emitter. Various types of mechanical position detectors also are possible. The resistance of a variable resistive element also can be made to change according to the position of the optical head 4 so that the value of a position-indicating signal changes with changes in the position of the optical head 4. Additionally, the detector could directly detect the position of a light spot formed by the light beam on the recording surface of the optical disk.

Driving control circuit 16 controls each section of the driving system of the information reproduction device. The I/O circuit (or interface) 17 exchanges each type of signal with each section of the driving system. The CPU 18 performs driving control of the optical head 4 to the desired track position based on a seek start signal 20 and a seek completion signal 21. The CPU 18 also outputs the prescribed light output signal 25 that indicates the light output value of the semiconductor laser based on each type of control information that is contained in the address data 23 and the memory 19 (ROM/RAM).

Next, with reference to Fig. 1, an explanation is provided of the operation of the information reproduction device of the present embodiment. Spindle motor 2 rotates optical disk 1 with a fixed number of rotations (constant angular velocity) under the control of the spindle motor drive circuit 3. The light beam (laser beam) that is irradiated from the semiconductor laser of optical head 4 is reflected by the recording surface of optical disk 1, and is detected with the PIN photo-diode attached to the optical head 4, and input to servo signal detection circuit 6.

The servo signal detection circuit 6 processes the input signal to generate a tracking error signal (TE) that indicates the position errors between the light beam and track, a track total signal (TT) that indicates the total reflected light from the track, the focus error signal (FE) that indicates the focal point error, and the Itotal signal (Itotal) that indicates the total light amount of focusing.

Tracking servo control is performed by the servo control circuit 7 so that the signal amplitude VTE of the tracking error signal TE is made to be the tracking remainder voltage VT0 or less, which is the tracking remainder allowed by the particular technical specifications of the reproduction device. This is done by controlling actuator 5 through servo drive circuit 8. By this process, the light beam ordinarily follows the specified track.

Focusing servo control is performed with the servo control circuit 7 so that the signal amplitude VFE of the focusing error signal FE becomes the focusing remainder voltage VF0 or less, allowed by the particular specifications of the reproduction device. This also is done by controlling the actuator 5 through the servo drive circuit 8. By this process, the recording reproduction surface of optical disk 1 ordinarily becomes a prescribed focal position.

In this way, focusing servo control and tracking servo control are performed, and the information from the desired track of optical disk 1 is reproduced as follows.

A PIN photo-diode detects the reflected light from optical disk 1. The PIN photo-diode output is processed and amplified by the reproduction signal detection circuit 9 to output the reproduction signal.

The reproduction signal processing circuit 10 and the ID and address detection circuit 11, perform processing on the reproduction signal so that the information that is recorded in the user data portion and the address portion of a sector is detected, respectively, and is output as the reproduction data 22 and address data 23.

The linear movement position detector 26 detects the radius directional position of optical head 4 relative to optical disk 1 to output the position data 27.

The address data 23 and position data 27 are input to the CPU 18 through the I/O circuit 17 of the driving control circuit 16. The light output to be used by the semiconductor laser is calculated by the CPU 18 based on the recording reproduction position on optical disk 1 that is shown by the address data 23.

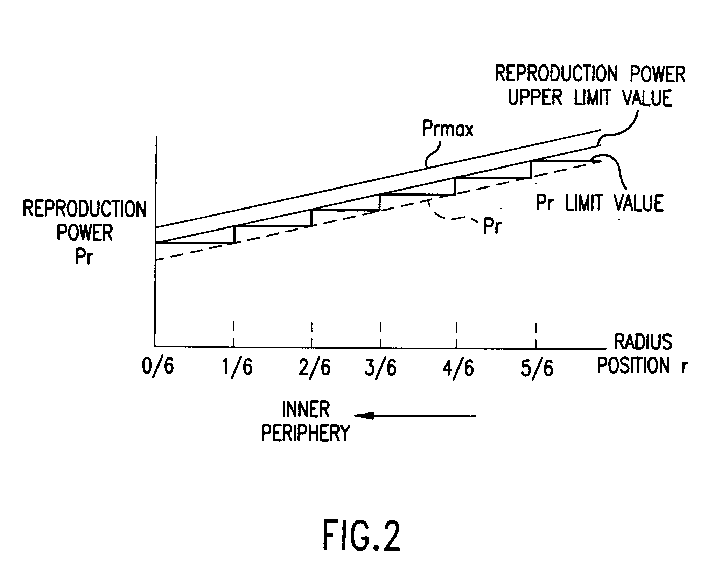

Fig. 2 is an explanatory figure that shows the relationship between the radius directional position r of the optical disk and the reproduction power Pr.

As explained above, the maximum value of the reproduction power Pr that does not destroy the recorded data, or in other words, the maximum allowable reproduction power Prmax, depends on the linear velocity of the light spot on the disk. In the case where the number of rotations of the optical disk 1 is fixed (constant angular velocity), Prmax becomes larger as the disk radius position r increases.

As shown in Fig. 2, in order to provide a margin of safety (due, e.g., to errors), the actual reproduction power Pr is established at a value that is a certain percentage lower than Prmax. The actual reproduction power Pr also increases as the disk radius r becomes larger, the same as Prmax. With the present embodiment, a value between Prmax and Pr is chosen to be the upper limit value of the reproduction power for each region or sector of the disk, as illustrated in Fig. 2. This is labeled in Fig. 2 as the reproduction power upper limit value.

Fig. 2 illustrates the case where the optical disk is partitioned into 6 regions in the radius direction. With the present embodiment, the limit value of the reproduction power Pr (the Pr limit value) is established at each region, and there is control in each region so that the reproduction power does not exceed the corresponding Pr limit value.

The Pr limit value is determined as follows. In Fig. 2, the line which shows the change of the reproduction power upper limit value relative to radius position r becomes larger as the radius position r becomes larger, as is also the case with the lines showing the change of Prmax and Pr. Accordingly, in each region, the reproduction power upper limit value becomes larger as the radius position approaches the outer periphery of the region. However, with the present invention, the reproduction power upper limit value on the most inner periphery of each region is chosen to be the Pr limit value for that entire region. In other words, the minimum value of the reproduction power upper limit value in a particular region is made to be the Pr limit value for the entire region.

In memory 19 of driving control circuit 16, the Pr limit value for each region (zone) established as mentioned above is recorded beforehand. It is also possible to record a formula from which the Pr limit value can be calculated, or to record this data as a data table. In addition, it is possible to record to memory 19 the calculation method for determining the value of reproduction power Pr relative to the radius directional position r, or the data table as well.

Based on the address data 23 that was input through the I/O circuit 17, and based on CPU 18 reading the calculation formula or data table recorded in memory 19, the output value of the light beam that should be irradiated from the semiconductor laser is determined for the present irradiation position of the light beam, and the prescribed light output signal 25 is output.

In this way, the prescribed light output signal 25 that was output from CPU 18 is input to the light output control circuit 14 through the I/O circuit 17. Additionally, the driving electrical current flowing to the semiconductor laser through the laser drive circuit 15 is controlled using the APC (Automatic Power Control) operation.

As detailed below, the position data 27 output by detector 26 is used to confirm that the optical head 4 is at the appropriate zone for the prescribed light output. If such is not the case, the light output is changed.

With the present embodiment, the beginning points of the erasure, recording, and reproduction relative to the disk are made from the outer periphery of the disk. Because of this, in the case where continuous reproduction is performed, the reproduction power Pr changes from large to small (i.e., it decreases).

The detection range of linear movement position detector 26 covers the entire radius of the optical disk 1.

Focusing servo and tracking servo are operated as explained above, and the irradiation position of the light beam from optical head 4 is controlled to continuously follow the track. At that time, the position of optical head 4 is recognized by address data 23, and the light beam is irradiated to the disk with reproduction power Pr relative to this position.

At this time, the position of optical head 4 is also detected by the linear movement position detector 26. Accordingly, the position of the optical head 4 (in other words, the irradiation position of the light beam) is detected with regard to the region (zone) in the radius direction of the optical disk on which the light beam is projected. Based on these detection results, the position data 27 is output.

The CPU 18 receives the position data 27, and determines the Pr limit value for the present position of optical head 4. This is performed by the reading of the Pr limit value for each region (zone) recorded in memory 19.

The CPU 18 also compares the present established value of the reproduction power Pr indicated by prescribed light output signal 25 previously output to the Pr limit value. If the reproduction power Pr that is presently established is greater than the Pr limit value, the reproduction power Pr is quickly established back down to the Pr limit value, and the prescribed light output signal 25 is output again.

When the optical head 4, in following the track, moves to the next zone in the inner peripheral direction, this is detected by linear movement position detector 26, and the Pr limit value of the next zone is established.

Also, when track seeking operations are performed (in which the irradiation position of the light beam is moved to other tracks from the present track) and the like, optical head 4 is moved so that many tracks are crossed. At the time when the movement begins, the Pr limit value is established relative to the region (zone) to which the optical head is to be moved, if that location is in the direction of the inner periphery. The CPU 18 periodically inputs the position signal from linear movement position detector 26 even during movement, and based on a comparison with reproduction power Pr, even if the location to which the optical head 4 is moved is mistakenly exceeded, the recorded data on the disk is not destroyed because the Pr limit value is re-established.

Also, if the location to which the optical head is moved is the direction of the outer periphery, movement is started in the state where the Pr limit value is established for the region from which the movement takes place. Then, when the movement is completed, the servo control is applied, and a Pr limit value is established for the zone of the place to which the optical head has moved.

By this process, even if the target position is mistakenly judged to be achieved, since the upper limit value of Pr is calculated and established based on the position of optical head 4, the data of the location where the optical head is moved to is not destroyed due to the reproduction power Pr becoming too large.

While this invention has been described in conjunction with specific embodiments thereof, it is evident that many alternatives, modifications and variations will be apparent to those skilled in the art. Accordingly, the preferred embodiments of the invention set forth herein are intended to be illustrative, not limiting. Various changes may be made without departing from the spirit and scope of the invention as defined in the following claims.

## Claims

1. An information reproduction device that reproduces information from a recording surface of an optical disk by irradiating a light beam having a specified reproduction power onto the recording surface of the optical disk, the device comprising:
position detection means (26) for detecting a radius position on the optical disk where the light beam is irradiated; and
light output control means (16) for controlling the light output of the light beam based on the radius position detected by the position detection means (26), the light output control means (16) preventing the light output from exceeding an upper limit value for the detected radius position.

2. The device of claim 1, wherein the information is recorded on a plurality of regions into which the recording surface of the optical disk is partitioned, and the light output control means (16) establishes a different upper limit value for each of the regions.

3. The device of claim 1 or claim 2, wherein the light output control means (16) increases the upper limit value as the detected radius position of the optical disk increases.

4. The device of claim 1, claim 2 or claim 3, wherein the light output control means (16) establishes the upper limit value to be smaller than a maximum light output value that does not destroy the recorded information.

5. The device of claim 1, claim 2, claim 3 or claim 4, further comprising an optical head (4) that emits the light beam and that changes the radius position of the light beam by moving in a radius direction of the optical disk, and wherein the position detection means (26) detects the radius position of the light beam by detecting the radius position of the optical head (4).

6. The device of any of claims 1-5, wherein the light output control means (16) includes a memory (19), and the light output control means (16) establishes the upper limit value by looking up a predetermined upper limit value in the memory based on the detected radius position.

7. A method of using the claim 1 device to reproduce information from a recording surface of the optical disk, the method comprising the steps of:
irradiating a light beam onto the recording surface of the optical disk (1);
detecting a radius position on the optical disk (1) where the light beam is irradiated using the position detection means (26); and
using the light output control means (16), controlling the intensity of the light beam based on the detected radius position so as to prevent the intensity of the light beam from exceeding an upper limit value for the detected radius position.

8. The method of claim 7, wherein the information is recorded on a plurality of regions into which the recording surface of the optical disk (1) is partitioned, and the controlling step includes the step of establishing a different upper limit value for each of the regions.

9. The method of claim 7 or claim 8, wherein the controlling step includes the step of increasing the upper limit value as the detected radius position of the optical disk (1) increases.

10. The method of claim 7, claim 8 or claim 9, wherein the light beam is emitted by an optical head (4) that changes the radius position of the light beam by moving in a radius direction of the optical disk (1), and wherein the detecting step comprises detecting the radius position of the light beam by detecting the radius position of the optical head (4).
